# EUROPÄISCHE PATENTSCHRIFT

(11) **EP 2 204 647 B1**
(45) Veröffentlichungstag und Bekanntmachung des Hinweises auf die Patenterteilung: **23.11.2011**
(21) Anmeldenummer: 10160426.2
(22) Anmeldetag: 15.05.2003
(51) Int. Cl.: G01N 27/416

(54) **Potentiometrische Sensoreinrichtung für pH-Wertmessung**
Potentiometric sensor for pH measurement
Capteur potentiométrique pour la mesure de pH

(43) Veröffentlichungstag der Anmeldung: 07.07.2010
(62) Teilanmeldung aus: 03816952.0
(73) Patentinhaber: Endress+Hauser Conducta Gesellschaft für Mess- und Regeltechnik mbH+Co. KG, 70839 Gerlingen (DE)
(72) Erfinder: Pechstein, Thorsten, 01445, Radebeul (DE); Steinmüller, Dirk, 76139, Karlsruhe (DE); Straub, Hermann, 72108, Rottenburg (DE); Wittmer, Detlev, 75433, Maulbronn (DE)
(74) Vertreter: Andres, Angelika Maria

(56) Entgegenhaltungen:
- EP-A1- 0 548 751
- EP-A1- 1 143 239
- WO-A1-92/17775
- JP-A- 10 253 572
- US-A- 5 384 028
- US-A- 5 690 893

## Beschreibung

Die vorliegende Erfindung betrifft potentiometrischen Sensoren, insbesondere einen pH-Sensor bzw. eine pH-Elektrode zum Anschluß an einen Transmitter.

Potentiometrische Sensoren messen Potentiale bei großen Widerständen, wie dies bei pH-Sensoren und Redox-Sensoren der Fall ist. PH-Elektroden bzw. Redox-Elektroden erfassen insbesondere ionische Potentiale in Lösungen. Sie sind in vielen Anwendungsfällen starkem Verschleiß ausgesetzt, so daß sie häufig nach kurzer Betriebszeit ausgetauscht werden. Insoweit sind diese Elektroden Verbrauchsmaterialien, die bei gegebener Meßgenauigkeit möglichst kostengünstig bereitzustellen sind.

Nachfolgend wird die Problemstellung der vorliegenden Erfindung und deren Lösung exemplarisch anhand von pH-Elektroden bzw. pH-Sensoren erläutert. Die Ausführungen gelten sinngemäß jedoch auch für andere potentiometrische Sensoren, insbesondere Redox-Sensoren bzw. Redox-Elektroden.

Der Stand der Technik kennt im wesentlichen drei Typen von pH-Sensoren, die nachfolgend kurz skizziert sind,

Die einfachsten pH-Sensoren sind einfache pH-Elektroden ohne jegliche Elektronik. Diese pH-Elektroden liefern ein pH-abhängiges Potential, welches an geeigneten elektrischen Anschlüssen abgreifbar ist. Optional weisen diese pH-Elektroden zur Temperaturkompensation einen integrierten Temperatursensor, z.B. PT100, auf, dessen Potential an geeigneten Temperaturausgängen abgreifbar ist. Zum Messen werden diese pH-Sensoren gewöhnlich über ein Kabel an einen Transmitter angeschlossen, der aus dem pH-abhängigen Potential und ggf. dem Temperatursignal des Temperatursensors ein Meßsignal generiert. Neben den beschriebenen einfachen pH-Elektroden, bzw. Sensoren gibt es solche mit einem integrierten Vorverstärker zur Impedanzwandlung, Das Ausgangssignal des Vorverstärkers ist das Potential des pH-Sensors, wobei anstelle des Innenwiderstands des pH-Sensors in der Größenordnung von 100 Megaohm, der Innenwiderstand des Vorverstärers nur einige Ohm beträgt. Daher ist die weitere Übertragung und Verarbeitung des Ausgangspotentials zu einem Transmitter erheblich vereinfacht. Die Vorverstärker sind entweder batteriegespeist, oder sie werden über ein Kabel versorgt.

Schließlich sind unter dem Namen DirectLine von Honeywell einfache Transmitter erhältlich, welche direkt auf die pH-Sensoren montiert werden. Somit wird in unmittelbarer Nähe des Sensors z.B. ein 4...20 mA Meßsignal generiert, welches dann ohne weiteres zur Leitwarte übertragen werden kann.

Es ist bei allen pH-Elektroden bzw. pH-Sensoren nach dem Stand der Technik erforderlich, die Elektroden nach dem Anschluß an den Transmitter zu kalibrieren, wonach die ermittelten Kalibrierungsparameter im Transmitter gespeichert werden. Wenngleich dieses Konzept nach der Kalibrierung in den meisten Fällen einen zufriedenstellenden Meßbetrieb ermöglicht, weist Sie jedoch einige schwerwiegende Nachteile auf.

Sensoren müssen neu kalibriert werden, wenn sie an einen anderen Transmitter angeschlossen werden. Sensoren sind ohne vorherige Kalibration nicht betreibbar.

Die europäische Patentanmeldung 1 143 239 A1 offenbart ein Verfahren zur Überwachung der Qualität von elektrochemischen Messsensoren und eine Messanordnung mit einem elektrochemischen Messsensor mit einer induktiven Schnittstelle zur Ausgabe eines von dem pH-Wert abhängigen Signals an eine übergeordnete Einheit, und einen digitalen Datenspeicher, der mit der pH-Elektrode eine funktionelle Einheit bildet.

In JP 10-253572 ist eine pH-Elektrode beschrieben, die einen Speicher enthält, in dem die Typbezeichnung und eine Seriennummer der Elektrode zum Zeitpunkt der Herstellung gespeichert werden. Ein mit der pH-Elektrode verbundenes Messgerät kann die im Speicher der pH-Elektrode gespeicherten Daten auslesen und Kalibrierdaten im Speicher der pH-Elektrode ablegen.

Aus WO 92/17775 A1 ist eine Elektrode, beispielsweise eine pH-Elektrode, bekannt, die an einem Ort kalibriert und an einem davon verschiedenen Ort, insbesondere in Verbindung mit verschiedenen Messgeräten, zur Durchführung von Messungen eingesetzt werden kann. Zu diesem Zweck ist die Elektrode mit einer Kalibriereinheit verbunden, die einen zur Speicherung von Kalibrierdaten ausgestalteten Speicher aufweist. Die Kalibriereinheit kann in der Elektroden oder einer Halterung der Elektrode integriert sein. Andere informationen wie Zeitpunkt der Kalibrierung, die Zeit bis zur nächsten Kalibrierung, identifikationsnummem und der Elektrodentyp können ebenfalls in dem Speicher abgelegt werden.

Sensorspezifische Zusatzinformationen wie Typbezeichnung, Lebensdauer oder Historiendaten sind nicht oder nur mit großem Aufwand für jeden Sensor ermittelbar, insbesondere dann, wenn die Zuordnung zwischen einem Sensor und einem Transmitter verlorengegangen ist.

Sensoren müssen in der Regel am Ort des Transmitters bzw. Meßumformers kalibriert werden. Insbesondere in solchen Fällen, bei denen am Ort des Transmitters widrige Arbeitsbedingungen herrschen sind aufwendige Kalibrierungen wie die Ermittlung des isothermenarbeitspunktes praktisch nicht durchführbar. Dies führt zu Kompromissen hinsichtlich der erzielbaren Meßgenauigkeit.

Der vorliegenden Erfindung liegt daher die Aufgabe zugrunde, einen pH-Sensor bereitzustellen, der die Nachteile des Stands der Technik überwindet.

Die Aufgabe wird erfindungsgemäß gelöst durch den pH-Sensor gemäß des unabhängigen Patentanspruchs 1.

Der digitale Datenspeicher ist insofern fest mit dem Elementarsensor verbunden, als der Datenspeicher und der Elementarsensor eine nicht trennbare Einheit bilden.

Die übergeordnete Einheit ist insbesondere ein Transmitter bzw. ein Meßumformer oder eine andere geeignete Vorrichtung zur ErFassung und Verarbeitung der Daten des pH-Sensors.

Für das Wesen der Erfindung ist es unbeachtlich, ob die zum Betrieb des Sensors notwendige Analogelektronik ebenfalls fest mit dem pH-Sensor verbunden ist, und die Daten von dort in den Datenspeicher geschrieben und/oder ausgelesen werden, oder ob das Speichern und/oder Auslesen der Daten von der übergeordneten Einheit erfolgt.

Der Anschluß der Schnittstelle des pH-Sensors an das übergeordnete System kann direkt oder über ein Anschlußkabel erfolgen.

In einer Ausführungsform ist die Schnittstelle des pH-Sensors eine kontaktlose Schnittstelle. Der Begriff kontaktlos soll bezeichnen, daß die sensorseitige Schnittstelle von der transmitterseitigen Schnittstelle elektrisch bzw. galvanisch isoliert ist. Die kontaktlose Schnittstelle kann beispielsweise eine optische, kapazitive oder induktive Schnittstelle sein, wobei derzeit eine induktive Schnittstelle bevorzugt ist.

Selbstverständlich kann auch eine Schnittstelle mit elektrisch leitenden Kontakten zur Realisierung eines erfindungsgemäßen pH-Sensors verwendet werden.

Der erfindungsgemäße pH-Sensor weist in einer bevorzugten Ausführungsform einen Analog-Digital-Wandler auf, welcher ein digitales Signal generiert, das eine Funktion des pH-Wert-abhängigen Potentials des Elementarsensors ist.

Der erfindungsgemäße pH-Sensor umfaßt vorzugsweise weiterhin einen Mikroprozessor welcher einerseits den Datenaustausch zwischen der Schnittstelle des pH-Sensors und dem übergeordneten System und andererseits das Auslesen und Beschreiben des digitalen Datenspeichers steuert. Besonders bevorzugt ist der Analog-Digital-Wandler in den Mikroprozessor integriert.

Vorzugsweise weist der pH-Sensor ein Gehäuse auf, in welches der Datenspeicher, die Schnittstelle und ggf. weitere elektronische Bauelemente, wie der Analog-Digital-Wandler und der Mikroprozessor integriert sind.

Für einfache Ausgestaltungen der vorliegenden Erfindung, insbesondere für jene mit elektrisch leitender Übertragung des pH-Wert-abhängigen Potentials zum Transmitter, kann auf einen Mikroprozessor am pH-Sensor verzichtet werden. Das Auslesen bzw. Schreiben von Daten auf den digitalen Datenspeicher kann in diesem Fall vom übergeordneten System bzw. Transmitter gesteuert werden.

Der digitale Datenspeicher ist vorzugsweise ein mehrfach und/oder einmalig beschreibbarer Datenspeicher. Derzeit sind EEPROMS besonders bevorzugt, wobei EPROMS grundsätzlich ebenfalls geeignet sind.

Der digitale Datenspeicher kann insbesondere eines oder mehrere der folgenden Daten speichern:
Kalibrierdatum;
die ermittelte Empfindlichkeit des Sensors bei einer ersten Temperatur, insbesondere 25°C;
das ermittelte Asymmetriepotential bei 25°C;
den Temperaturoffset;
logistische Informationen, beispielsweise einen SAP-Code und/oder eine
Bestellnummer; die Seriennummer;
den Temperatureinsatzbereich;
den pH-Einsatzbereich;
die Extremalwerte der Betriebstemperatur;
die Extremalwerte des Betriebs-pH;
das Signum eines Laboranten (zur Nachverfolgbarkeit der Kalibration);
die Einsatzdauer;
den Isothermenschnittpunkt;
den Sensor-Check-System-Status;
den pH-Messwert; und
den Temperaturmesswert.

Die übergeordnete Einheit bzw. der Transmitter kann vorzugsweise auf sämtliche der abgelegten Daten mit einem Lesebefehl zugreifen.

Vorzugsweise kann die übergeordnete Einheit bzw. der Transmitter über Schreibbefehle eines bzw. mehrere der folgenden Daten im Speicher ablegen lassen:
Kalibrierdatum;
die ermittelte Steilheit des Potentials bei einer ersten Temperatur, insbesondere 25°C;
den ermittelten Potentialnullpunkt bei 25°C;
den Temperaturoffset;
das Signum eines Laboranten (zur Nachverfolgbarkeit der Kalibration); und den Isothermenschnittpunkt.

Bei einer Erstüberprüfung des Sensors, wird der Datenspeicher beispielsweise über Schreibbefehle mit den folgenden Daten beschrieben:
Logistische Informationen;
Temperatureinsatzbereich; und
pH Einsatzbereich.

Der erfindungsgemäße pH-Sensor hat den Vorteil, daß sensorspezifische Daten, d.h. Gerätedaten, Prozeßdaten und/oder Historiendaten untrennbar mit dem Sensor verbunden sind. Dies ermöglicht einerseits eine Vorkalibrierung des Sensors bevor er am Einsatzort montiert wird, und andererseits den Einsatz eines Sensors an unterschiedlichen Transmittern, ohne das eine Neukalibrierung zwingend erforderlich ist.

Weitere Gesichtspunkte der Erfindung ergeben sich aus den Abhängigen Patentansprüchen, der Beschreibung der Ausführungsbeispiele und den Zeichnungen.

Es zeigt:
- Fig.1:: ein Blockschaltbild eines erfindungsgemäßen pH-Sensors; und
- Fig.2:: eine perspektivische Detailansicht eines erfindungsgemäßen pH- Sensors.

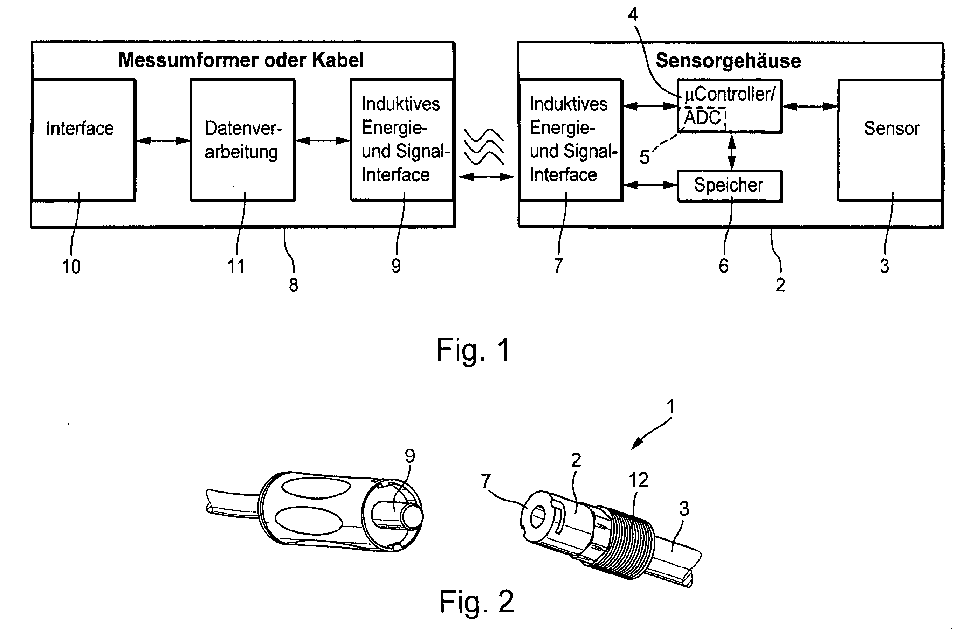

Ein Ausführungsbeispiel der Erfindung wird nun anhand von Figuren 1 und 2 erläutert. Das Blockschaltbild in Fig. 1 zeigt die in einem Sensorgehäuse 2 des pH-Sensors 1 angeordneten Komponenten, wobei das Gehäuse 2 fest, d.h. untrennbar, mit einem Elementarsensor 3 verbunden ist. Der Elementarsensor kann insbesondere eine stabförmige pH-Elektrode sein, auf deren, dem Medium abgewandten Ende das Gehäuse 2 angeordnet ist.

Im Gehäuse 2 ist ein Mikroprozessor 4 angeordnet, der vorzugsweise einen integrierten Analog-Digital-Wandler (ADC) 5 aufweist. Der Mikroprozessor 4 ist einerseits mit den analogen Ausgängen des Elementarsensors 3 gekoppelt. Andererseits ist
der Mikroprozessor mit einem digitalen Speicher 6 verbunden, der bei dieser Ausführungsform ein EEPROM ist. Schließlich ist der Mikroprozessor 4 mit einer induktiven Schnittstelle 7 verbunden, über die einerseits die Energieversorgung des pH-Sensors 1 und andererseits die Datenübertragung von und zu einer übergeordneten Einheit erfolgt, die in diesem Fall einen Transmitter 8 umfaßt. Optional kann auch eine direkte Verbindung zwischen dem Speicher 6 und der Schnittstelle 7 vorgesehen sein.

Der Transmitter 8 umfaßt eine transmitterseitige induktive Schnittstelle 9, zur Energieversorgung des pH-Sensors 1 und zum digitalen Datenaustausch mit dem pH-Sensor 1. Weiterhin umfaßt der Transmitter eine Datenverarbeitungseinheit 11, welche mit der transmitterseitigen induktiven Schnittstelle 9 und einer systemseitigen Schnittstelle 10 gekoppelt ist. An der systemseitigen Schnittstelle können Meßdaten ausgegeben und gerätespezifische Daten ausgetauscht werden. Hierzu kommen alle gängigen Protokolle wie beispielsweise HART, Fieldbus oder Profibus in Frage.

Im Meßbetrieb empfängt der Mikroprozessor 4 vom Elementarsensor mindestens ein analoges Signal, nämlich ein pH-Wert-abhängiges Potential und vorzugsweise auch ein temperaturabhängiges Potential. Die analogen Signale werden vom ADC 5 in digitale Signale gewandelt, welche einerseits im Datenspeicher 6 abgelegt und andererseits über die induktive Schnittstelle 7 an den Transmitter 8 ausgegeben werden können.

Die Parameter zur Auswertung der pH-abhängigen Potentiale und ggf. der Temperaturdaten sind in Form von Kalibrationsdaten auf dem Datenspeicher 6 abgelegt. Die Kalibrierungsdaten werden nach einem Lesebefehl des Transmitters 8 entweder über den Mikroprozessor 4 oder direkt an die induktive Schnittstelle 7 ausgegeben, um der Datenverarbeitungseinheit 11 des Transmitters 8 zur weiteren Verarbeitung wie Fehlerkompensationen etc. zur Verfügung zu stehen. Bei der Erstkalibrierung oder einer Nachkalibrierung des pH-Sensors 1 werden transmitterseitig Schreibbefehle zur Speicherung der ermittelten Kalibrierungsdaten ausgegeben, woraufhin die Daten auf dem EEPROM 6 abgelegt werden.

Figur 2 zeigt ein Ausführungsbeispiel für die mechanische Anordnung des Gehäuses 2 des pH-Sensors 1 auf einem stabförmigen Elementarsensor 3, insbesondere einer Glaselektrode.

Das Gehäuse 2 weist auf seiner Mantelfläche ein Gewinde 12 auf, mit dem der pH-Sensor 1 in einer Armatur montiert werden kann. Das Gehäuse 2 weist einen, dem Elementarsensor 3 abgewandten, zylindrischen Endabschnitt auf, in dessen Mantelfäche Aussparungen eines Bajonettverschluß angeordnet sind. In diesem Endabschnitt ist die induktive Schnittstelle 7 angeordnet. Stirnseitig weist das Gehäuse 2 ein zylindrisches axiales Sackloch auf, welches als Aufnahme für einen gehäusten Ferritkem einer transmitterseitigen induktiven Schnittstelle 9 dient. Beim Ausführungsbeispiel ist die transmitterseitige induktive Schnittstelle 9 als Stecker an einem Kabel gestaltet, welches mit dem Transmitter verbunden ist. Gleichermaßen, kann die transmitterseitige Schnittstelle 9 direkt an einem Transmittergehäuse o.ä. ausgebildet sein. Der Stecker weist an seiner dem pH-Sensor 1 zugewandten Stirnseite eine hülsenartige Mantelfläche auf, die axial vorsteht und den Ferritkern koaxial umgibt. Die hülsenartige Mantelfläche umschließt zumindest einen Teil des zylindrischen Endabschnitts des Gehäuses 2, wenn der Stecker auf dem Gehäuse 2 befestigt ist. Radial einwärts verlaufende Vorsprünge auf der hülsenartigen Mantelfläche befinden sich dann mit den Aussparungen des Bajonettverschlusses in Eingriff, um den Stecker zu sichern.

## Patentansprüche

1. Potentiometrischer Sensor, umfassend
eine pH-Elektrode zum Erfassen eines pH-Werts;
eine Schnittstelle zur Ausgabe eines von dem pH-Wert abhängigen Signals an eine übergeordnete Einheit, insbesondere einen Transmitter (8);
einen digitalen Datenspeicher (6), der mit der pH-Elektrode in der Weise fest verbunden ist, dass der digitale Datenspeicher mit der pH-Elektrode eine nicht trennbare Einheit bildet,
**dadurch gekennzeichnet, dass**
der Datenspeicher dazu ausgelegt ist, die Extremalwerte der Betriebstemperatur zu speichern;
wobei der potentiometrische Sensor (1) über eine mechanische Kupplung, welche die Schnittstelle umfasst, lösbar mit einem Kabel zur Kommunikation mit der übergeordneten Einheit verbindbar ist.

2. Potentiometrischer Sensor nach Anspruch 1,
wobei die Schnittstelle neben der Datenkommunikation die Energieversorgung des potentiometrischen Sensors gewährleistet.

3. Potentiometrischer Sensor nach einem der vorhergehenden Ansprüche, weiterhin umfassend einen Mikroprozessor (4) zur Steuerung des Datenspeichers (6) und/oder zur Steuerung der Schnittstelle zur Kommunikation mit der übergeordneten Einheit (8).

4. Potentiometrischer Sensor nach einem der Ansprüche 1 bis 3, wobei der Datenspeicher so geschaltet ist, daß er über die Schnittstelle von der übergeordneten Einheit (8) steuerbar ist.

5. Potentiometrischer Sensor nach einem der Ansprüche 1 bis 4, wobei die Schnittstelle eine galvanische Schnittstelle ist.

6. Potentiometrischer Sensor nach einem der vorhergehenden Ansprüche, weiterhin umfassend einen Temperaturfühler.

7. Potentiometrischer Sensor nach Anspruch 1,
wobei die Schnittstelle eine kontaktlose Schnittstelle ist.

8. Potentiometrischer Sensor nach Anspruch 7,
wobei die kontaktlose Schnittstelle eine optische, kapazitive oder induktive Schnittstelle ist.

9. Potentiometrischer Sensor nach Anspruch 1,
wobei die Schnittstelle eine Schnittstelle mit elektrisch leitenden Kontakten ist.

## Claims

1. Potentiometric sensor, comprising:
a pH electrode for measuring a pH value;
an interface for outputting a signal, which is dependent on the pH value, to a higher-order unit, particularly a transmitter (8);
a digital data storage unit (6) which is permanently connected to the pH electrode in such a way that the digital data storage unit and the pH electrode form an inseparable unit;
**characterized in that**
the data storage unit is designed to save the extremal values of the operating temperature;
wherein the potentiometric sensor (1) can be non-permanently connected to a cable for communication with the higher-order unit via a mechanical coupling which comprises the interface.

2. Potentiometric sensor as claimed in Claim 1,
wherein the interface is responsible for ensuring the power supply of the potentiometric sensor in addition to data communication.

3. Potentiometric sensor as claimed in one of the previous claims, further comprising a microprocessor (4) for controlling the data storage system (6) and/or for controlling the interface for communication with the higher-order unit (8).

4. Potentiometric sensor as claimed in one of the Claims 1-3, wherein the data storage unit is switched in such a way that it can be controlled by the higher-order unit (8) via the interface.

5. Potentiometric sensor as claimed in one of the Claims 1-4, wherein the interface is a galvanic interface.

6. Potentiometric sensor as claimed in one of the previous claims, further comprising a temperature sensor.

7. Potentiometric sensor as claimed in Claim 1,
wherein the interface is a noncontact interface.

8. Potentiometric sensor as claimed in Claim 7,
wherein the noncontact interface is an optical, capacitance or inductive interface.

9. Potentiometric sensor as claimed in Claim 1,
wherein the interface is an interface with electrically conductive contacts.

## Revendications

1. Capteur potentiométrique, comprenant :
une électrode pH destinée à la mesure d'un pH ;
une interface destinée à l'émission d'un signal dépendant du pH vers une unité maître, notamment un transmetteur (8) ;
une mémoire de données numérique (6), laquelle est reliée de façon fixe avec l'électrode pH de telle manière que la mémoire de données numérique forme une unité inséparable avec l'électrode pH,
**caractérisé en ce**
**que** la mémoire de données est conçue de telle manière à mémoriser les valeurs extrêmes de la température de service ;
le capteur potentiométrique (1) pouvant être relié par l'intermédiaire d'un couplage mécanique, lequel comprend une interface, de façon amovible avec un câble pour la communication avec l'unité maître.

2. Capteur potentiométrique selon la revendication 1, pour lequel l'interface assure, outre la communication de données, l'alimentation en énergie du capteur potentiométrique.

3. Capteur potentiométrique selon l'une des revendications précédentes, comprenant en outre un microprocesseur (4) destiné à la commande de la mémoire de données (6) et/ou destiné à la commande de l'interface de communication avec l'unité maître (8).

4. Capteur potentiométrique selon l'une des revendications 1 à 3, pour lequel la mémoire de données est conçue de telle manière qu'elle puisse être commandée par l'unité maître (8), par l'intermédiaire de l'interface.

5. Capteur potentiométrique selon l'une des revendications 1 à 4, pour lequel l'interface est une interface galvanique.

6. Capteur potentiométrique selon l'une des revendications précédentes, comprenant en outre une sonde de température.

7. Capteur potentiométrique selon la revendication 1, pour lequel l'interface est une interface sans contacts.

8. Capteur potentiométrique selon la revendication 7, pour lequel l'interface sans contacts est une interface optique, capacitive ou inductive.

9. Capteur potentiométrique selon la revendication 1, pour lequel l'interface est une interface avec des contacts électroconducteurs.
